Europäisches Patentamt

European Patent Office

Office européen des brevets

(11) Publication number: **0 472 795 A1**

# EUROPEAN PATENT APPLICATION

(21) Application number: 90309587.5

(22) Date of filing: 31.08.90

(51) Int. Cl.⁵: **C08F 6/24**

(43) Date of publication of application:
04.03.92 Bulletin 92/10

(84) Designated Contracting States:
BE DE ES FR GB NL

(71) Applicant: **JAPAN SYNTHETIC RUBBER CO., LTD.**
**11-24, Tsukiji-2-chome Chuo-ku**
**Tokyo 104(JP)**

(72) Inventor: **Takeuchi, Mikio**
**69-1, Sasagawa, 8-chome**
**Yokkaichi-shi(JP)**
Inventor: **Uchimura, Kazumi**
**24-1, Okadai-2-chome**
**Yokkaichi-shi(JP)**
Inventor: **Owaki, Masafumi**
**1-4-301, Morigayamacho**
**Yokkaichi-shi(JP)**

(74) Representative: **Lamb, John Baxter et al**
**MARKS & CLERK 57-60 Lincoln's Inn Fields**
**London WC2A 3LS(GB)**

(54) **Process for recovering polymer.**

(57) A process for recovering a polymer from a slurry of the polymer obtained by homopolymerizing an olefin or copolymerizing at least two olefins with or without a non-conjugated diene in a $C_{3-6}$ hydrocarbon solvent), the process comprising supplying the polymer slurry to a screw press having a filtration means, removing most of the hydrocarbon solvent from the slurry through the filtration means and concentrating and discharging the remaining wet polymer by screw action from the screw press.

This invention relates to a process for recovering a polymer, and more particularly, to a process for easily separating and recovering an olefin polymer from its slurry in a hydrocarbon solvent having a small number of carbon atoms.

Heretofore, olefins such as ethylene, propylene and the like have often been commercially (co)-polymerized alone, in combination or with other components such as non-conjugated diene and the like in the presence of a catalyst in a hydrocarbon solvent having 6 or less carbon atoms at a high pressure.

In the above (co)polymerization method, the polymerization solvent has generally a low boiling point, and therefore, it is possible to easily recover the polymer by removing the solvent from the polymer slurry by vaporization at a low temperature according to a flash method using a simple apparatus (see Japanese Patent Application Kokoku No. 40-24,479). However, when the flash method is adopted, (1) a gas-compressor having a very large voltage and a high compression ratio is required to recover the vaporized hydrocarbon and (2) a large scale, complicated equipment is required to remove the high-boiling impurities remaining in a product because when the low-boiling solvent having a small number of carbon atoms is evaporated (vaporized) the high-boiling impurities are little evaporated and concentrated in the slurry.

The above-mentioned residual, high-boiling components are unreacted high-boiling monomers such as 5-ethylidene-2-norbornene, cyclopentadiene and the like; solvents such as toluene and the like; organic acid esters used as electron-doner of catalyst, reaction products of the organic acid esters with organoaluminum compounds; oligomers and the like. When these are contained in the polymer, it is difficult to completely remove them from the polymer by a conventional means such as drying or the like and they emit a foul odor even when they are in a small amount. Therefore, particularly when the polymer is used in food-wrapping and the like, the presence of the high-boiling components becomes a problem. These high-boiling volatile matters are dissolved in each of the polymer and the solvent in the polymer slurry and are little evaporated in the course of evaporating off the solvent and remain concentrated in the polymer slurry. Thus, it is difficult to treat the high-boiling components.

Another method of removing the polymer includes a thickening method utilizing gravity, a centrifugal separation method utilizing a centrifugal force, a filtration method utilizing a filter (see Japanese Patent Application Kokai No. 60-94,408) and the like. However, under high concentration conditions, troubles due to adhesion of polymer particles are caused, and hence, it is impossible to take out the polymer slurry at a high concentration. This tendency is often found particularly in the case of polymer particles having a large tendency to adhere to each other such as ethylene-propylene copolymer particles.

As a known method for concentrating a polymer slurry, there is a screw-press dehydration method which is applied to the case in which the pressure of the atmosphere is close to atmospheric pressure and the solvent is aqueous. However, generally, an organic solvent is richer in affinity to the polymer than water and hence the polymer is swollen with or dissolved in the organic solvent, and as a result thereof or as a result of the polymer being made adhesive or viscous, the mechanical separation of the polymer becomes difficult. Therefore, said screw-press dehydration method has not been applied to a polymer slurry in an organic solvent.

The inventors of this invention have made extensive research to solve the above-mentioned problems of prior art and have consequently found that a polymer-recovery process in which a polymer slurry is kept under a high pressure to keep its solvent in the liquid state or the polymer slurry is kept under reduced pressure to vaporize a part of the solvent, thereby keeping the polymer slurry in a gas-liquid mixture state, most of the solvent is removed and recovered through filtration means, and the remaining polymer is transferred by a screw to continuously discharge a highly concentrated wet polymer, can greatly reduce the amount of energy consumed as compared with a conventional process, can concentrate the polymer slurry to a high concentration, and simultaneously is superior in ability to remove the high-boiling component.

An object of this invention is to provide a process for recovering a polymer from a slurry of the polymer, which process is free from the above-mentioned problem of prior art, can concentrate the polymer slurry to a high concentrate, is excellent in ability to remove the high boiling component contained in the polymer slurry and is small in amount of energy consumed.

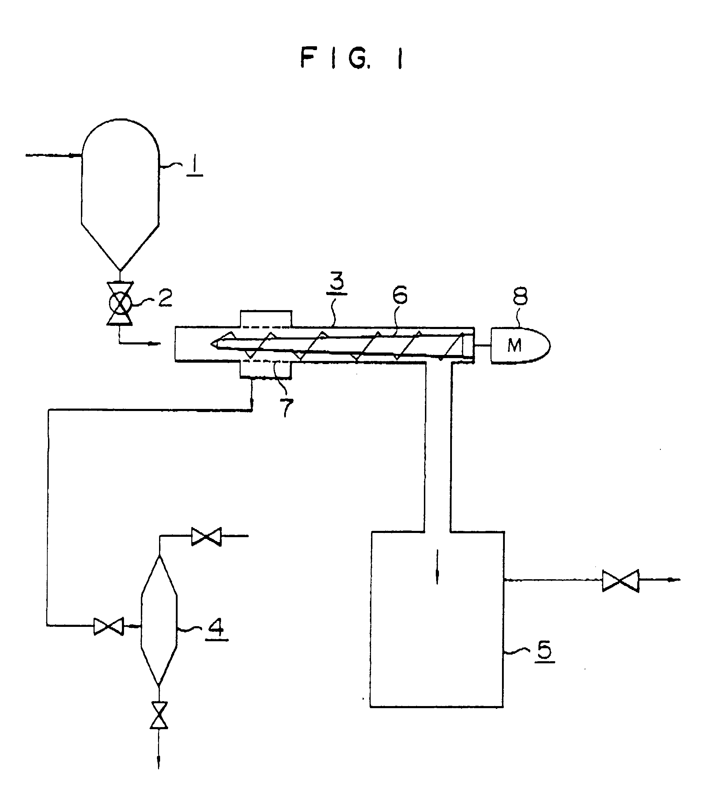

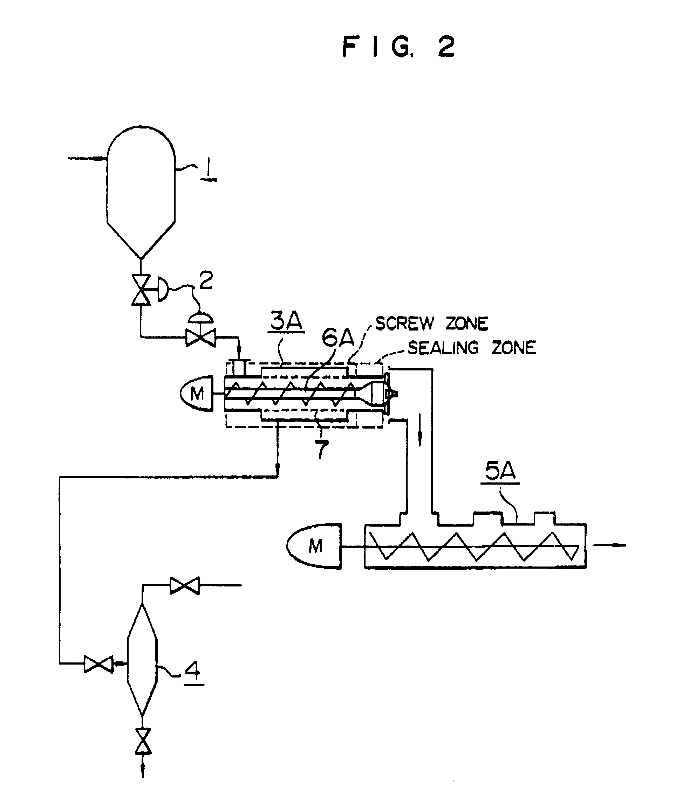

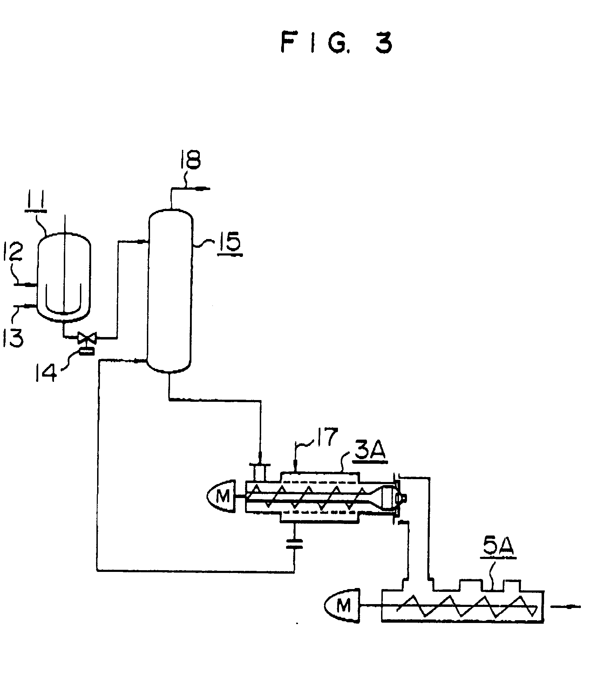

Other objects and advantages of this invention will become apparent from the following description and the accompanying drawings, in which Fig. 1 shows a systematic view of a polymer recovery apparatus illustrating an example of this invention, Fig. 2 shows a systematic view of a polymer recovery apparatus illustrating another example of this invention and Fig. 3 shows a systematic view of a polymer production apparatus using the apparatus of Fig. 2. In Figs. 1 to 3, 1 refers to a polymer slurry tank, 2 to a feeding valve, 3 and 3A to a concentrator, 4 to a recovered solvent tank, 5 to a polymer-discharge tank, 5A to a vented extruder, 6 and 6A to a screw, 7 to a slit screen, 8 to a motor, 11 to a polymerizer, 12 to a monomer-solvent-feeding line, 13 to a catalyst-feeding line, 14 to a withdrawing valve, 15 to a thickening vessel, 17 to a solvent-feeding line and 18 to a recovered solvent-withdrawing line.

According to this invention, there is provided a process for recovering a polymer from a slurry of the polymer, which comprises homopolymerizing an olefin or copolymerizing at least two olefins with or without a non-conjugated diene in a $C_{3-6}$ hydrocarbon solvent, supplying the resulting polymer slurry to a screw-press having a filtration means, removing most of the hydrocarbon solvent through the filtration means and concentrating and discharging the remaining wet polymer by the screw action from the screw press.

The hydrocarbon having 3 to 6 carbon atoms used in this invention includes propane, propylene, n-butane, isobutane, 1-butene, 2-butene, isobutylene, n-pentane, isopentane, cyclopentane, pentenes, n-hexane, cyclohexane and the like. These may be used alone or in admixture of two or more. Another solvent such as heptane, octane, nonane, decane, dodecane, kerosene, benzene, toluene or xylene may be used together with the hydrocarbon as far as the polymer is kept in substantially undissolved state in the solvent.

The polymer is prepared by homopolymerization of an olefin, copolymerization of at least two olefins or copolymerization of at least two olefins and a non-conjugated diene in the hydrocarbon solvent.

The above-mentioned olefin includes ethylene, propylene, 1-butene, hexene, 4-methylpentene-1 and the like, and the above non-conjugated diene includes alkenyl norbornenes and cyclic dienes.

The catalyst which may be used in the above polymerization or copolymerization include, for example, known Ziegler-Natta type catalysts, and particularly, a catalyst consisting of a combination of a compound of a metal such as Ti, V, Zr, Cr or the like with an organo-aluminum compound and an electron-donor such as an organic acid ester is used. However, the catalyst may be any catalyst as far as it is highly active and produces a polymer in a high yield.

The polymer slurry used in this invention may be any known polymer slurry obtained by polymerization in the above-mentioned hydrocarbon solvent and is not critical. The slurry concentration is preferably 5 - 50% by weight.

The polymer slurry can be washed in a manner known per se. There are, for example, (1) a batchwise method in which the polymer slurry is placed in a stirrer-provided vessel and a large amount of a solvent is added thereto together with a deactivator for the catalyst and other adjuvants which are optionally added, the resulting mixture is stirred for a predetermined period of time and thereafter allowed to stand, and the supernatant solvent is taken out, after which this procedure is repeated, if necessary, and (2) a continuous method in which the polymer slurry and a large amount of a solvent are continuously supplied to a tower-form apparatus to contact them with each other, thereby washing the polymer. In this invention, the continuous washing method is preferred, and it is more preferable to use a counter current washing tower.

The screw press having a filtration means used in this invention has, preferably, such a function that the solvent is filtered off when the polymer slurry passes on the filtering surface thereof and such a function that the polymer slurry from which the solvent has been substantially filtered off is squeezed to separate the remaining solvent from the polymer and simultaneously the polymer is discharged into the subsequent step. Particularly preferably, a continuous screw press is used. In the screw press, the polymer slurry is concentrated to a solid content of 50% by weight or more, preferably 70% by weight or more, more preferably 80% by weight or more. The filtration means may be a porous material, for example, a punched plate, a slit screen, a wire net or the like. The width of slit in the slit screen and the mesh of the wire net may be varied depending upon the particle diameters of polymer.

The temperature for concentrating the polymer slurry is preferably not higher than the polymerization temperature (usually 20° - 70°C). Usually, the temperature of the polymer slurry can easily be lowered by, for example, reducing the operation pressure to evaporate part of the low-boiling solvent. Since the latent heat of vaporization of the solvent is very great, the temperature can be lowered to the desired value by evaporating a small amount of the solvent. Accordingly, even in the case of a polymer which tends to adhere, the polymer slurry can be conditioned to a treatable state without causing adhesion.

In the screw press having a filtration means mentioned above, separation of solvent is conducted in a state as liquid as possible, and hence, it is possible to remove the high-boiling component dissolved in the slurry with a high efficiency along with the solvent.

According to the process of this invention, the solvent is removed as much as possible in the liquid state, and therefore, the amount of the high-boiling component contained in the concentrated polymer slurry becomes small, which facilitates reducing the amount of the final volatile matter contained in the polymer product.

In this invention, the polymer slurry is thus treated mechanically and forcibly, and therefore, the influence of change of particle state of the polymer slurry is small, and it is possible to treat even an adhesive polymer such as ethylene-propylene copolymer. Also, the amount of liquid to be separated can be made much larger than conventional thickening method, centrifugal separation method, filtration method or the like. Therefore, the load for drying the concentrated polymer slurry in the subsequent step can be greatly reduced. This is because the amount of the solvent remaining in the polymer slurry is small and the amount of the high-boiling component dissolved in the solvent is small, so that the finishing capacity is enhanced.

In order to enhance the function of the above-mentioned screw press, an additional means such as a heating or cooling means, a vent or the like may be attached to a screw press.

When it is necessary to remove the residue in the polymer separated in the screw press, there is used a drying means, for example, a vented extruder, a paddle dryer, a rotary dryer, a band dryer, an air-dryer, a fluidized bed dryer or the like. The screw press used in this invention has a transferring function, and hence, can easily be combined with these means.

In this invention, the polymer can be recovered at a temperature of 60°C a lower, for example, -50°C to 60°C.

This invention is explained in more detail referring to the accompanying drawings below.

Fig. 1 shows a systematic view of a polymer recovery apparatus illustrating an example of this invention.

This apparatus comprises a polymer slurry tank 1 in which a polymer slurry is stored; a screw press 3 which has a slit screen 7 on the entrance side on which the polymer slurry is fed from the tank 1, and has a screw 6, the compression ratio of the concentrated polymer on the discharge side of which is greater, a polymer-discharge tank 5 in which the polymer discharged from the outlet of the screw press 3 is stored; and a recovered solvent tank 4 in which the solvent separated through the slit screen 7 is stored. The screw press 3 has such a structure that the whole thereof can resists high pressure.

In such a construction, the polymer slurry is fed to the screw press 3 from the polymer slurry rank 1 through the feeding valve 2. In this case, the polymer slurry may be fed continuously at a constant rate or intermittently like pulse. Thus, the feeding method is not critical.

The polymer slurry fed to the screw press 3 is filtered through the slit screen 7 to remove the solvent out of the screw press. In this case, it is preferable that a part of the solvent be vaporized and the polymer slurry be passed in the gas-liquid mixed state on the slit screen, and the control of the state of the solvent can be easily conducted by adjusting the pressure in the screw press 3. The pressure is preferably adjusted to an optimum condition for the separation operation depending upon the amount of the high-boiling component accompanying the polymer slurry and upon the temperature conditions under which the polymer has such a hardness that the polymer itself can be easily treated. Even if the polymer is more or less removed through the slit screen 7 it can be recovered in the form of a slurry and then recycled.

The screw 6 installed in the screw press 3 is rotated by a motor 8 to transfer the polymer slurry to the discharge side while squeezing the polymer to separate the solvent from the polymer. The squeezed polymer is discharged by the action of the screw from the outlet of the screw press 3 into the polymer-discharge tank 5. The solvent separated is sent to the recovered solvent tank 4.

Fig. 2 shows a systematic view of a polymer recovery apparatus illustrating another example of this invention. Fig. 2 is different form Fig. 1 in the following respects: A screw press 3A which is provided with a screw 6A having no compression ratio and has a sealing zone an the polymer slurry-discharge side is substituted for the screw press 3 provided with a screw having a compression ratio, and a vented extruder 5A is substituted for the polymer-discharge tank 5. Even if such a style apparatus is used the polymer is squeezed to separate the solvent attached to the polymer from the polymer, whereby a high concentration percentage can be obtained. The polymer squeezed on the discharge side can be fed as such to the vented extruder by the pressing pressure; however, it is also possible to cut the squeezed polymer block with a cutter mounted at the discharge zone and thereafter discharge the cut polymer blocks into the vented extruder.

Fig. 3 shows a systematic view of a polymer-production apparatus in which the apparatus of Fig. 2 is used. In Fig. 3, the monomer and the solvent are fed to the polymerizer 11 through the monomer-solvent-feeding line 12 and the catalyst is continuously or intermittently fed through the catalyst-feeding line 13 to effect polymerization reaction. The polymer slurry thus obtained is withdrawn continuously or intermittently from the withdrawing valve 14 and sent to the thickening vessel 15 in which the polymer particles are settled to adjust the concentration to an appropriate value, after which the polymer particles are withdrawn continuously or intermittently therefrom into the screw press 3A. The solvent recovered in the thickening vessel 15 is recovered through the recovered solvent-withdrawing line 18 provided at the top of the thickening-separating vessel 15. The polymer slurry sent to the screw press 3A is squeezed to remove the unreacted monomer, the solvent and other volatile matters therefrom, and the polymer block is cut with a cutter mounted at the end of the screw press 3A and discharged into the vented extruder 5A, in which the remaining volatile matters attached to the polymer are removed, thereby obtaining a polymer product.

If necessary, a solvent is fed through the solvent-feeding line 17 to wash the polymer removed through the slit screen 7 and the polymer thus washed is recycled into the thickening vessel 15, to enable the polymer to be prevented from loss. The solvent recovered through the recovered solvent-withdrawing line 18 can be recycled as it is or after purification into the polymerizer 11 through the line 12. In addition, it is made possible to wash the polymer particles with a solvent by increasing the amount of the solvent fed through the line 17.

Example 1

(1) Production of polymer slurry

In a 100-liters polymerizer, ethylene was added to liquefied propylene together with a catalyst system consisting of a supported Ti catalyst, TIBAL (triisobutyl-aluminum) co-catalyst and an electron-doner (methyl para-toleuen) to continuously copolymerize ethylene and propylene. Hydrogen was used as a molecular weight regulator. By this continuous polymerization, there were obtained polymer particles having a propylene content of about 40% and a Mooney viscosity $ML_{1+4}(100°C)$ of about 50 in the form of a polymer slurry.

(2) Concentration of polymer

The polymer slurry obtained in (1) above was subjected to concentration in the apparatus of Fig. 1. The screw press 3 has a single screw having threads of 65 mm in diameter at equal pitch and a compression ratio formed by narrowing the gap between the cylinder and the screw by increasing the diameter of the screw in proportion to the distance in the discharge direction. In addition, a slit screen of 0.3 mm in opening is mounted at the entrance portion of the screw press 3. A polymer slurry in which the slurry concentration had been adjusted to 30 - 50% by weight by thickening was fed to the polymer slurry tank 1. The polymer slurry was sent to the screw press 3 at a pressure of about 10 kg/cm²G. The pressure on the effluent side of the slit in the screw press was adjusted to about 5 kg/cm²G.

The number of revolutions per minute of the screw was varied in a range of 35 to 50 rpm to effect the concentration. However, there was no difference in concentration effect when the revolution number was varied.

The pressure of the polymer-discharge tank 5 was varied in a range of 8.0 kg/cm² to 2.5 kg/cm² to effect concentration, whereby the amount of the polymer discharged was increased from 10 kg/hr to 80 kg/hr.

The solid concentration in the polymer discharged was measured to find that it was at least 80% by weight.

The polymer removed through the slit screen 7 was in an amount of 0.1% by weight of the total weight of the treated polymer, the gas/liquid ratio of the solvent passed through the slit screen was about 1/9.

When the concentration was conducted merely by settlement utilizing gravity without using the screw press of this invention, the polymer was concentrated to only about 50% by weight, and in order to recover the polymer solids at a rate of 80 kg/hr, the solvent had to be evaporated at a rate of 80 kg/hr to recover the solvent.

When the screw press of this invention was used it was possible to increase the solid concentration of the polymer discharged to 80% by weight or more, and therefore, it is sufficient that the solvent be evaporated at a rate of 20 kg/hr to recover the same and the amount of the gas recovered can be reduced to about 1/4.

Example 2

The polymer slurry obtained in Example 1 was concentrated in the apparatus of Fig. 2. In the screw press 3A was installed a screw 6A having threads of 110 mm in diameter at an equal pitch and having no compression ratio, and a slit screen 7 having an opening of 0.3 mm was provided in the screw zone. Also, at the discharge end of the screw 6A, a sealing zone was provided in which the opening was made small, and a cutter for cutting the discharged polymer block was provided at the end of the sealing zone. The outlet of the screw press 3A was connected with a vented extruder 5A through the feeding hopper. As the vented extruder 5A, a twin-screw extruder with three vents was used and, as the feeding hopper, a No. 1 vent was used.

The operation was conducted under the conditions that the pressure of the polymer slurry tank 1 was 10 kg/cm²G on the average, and the pressure on the effluent side of the slit screen 7 was 4.5 kg/cm²G on the average.

The screw 6A was rotated at 30 rpm and the polymer block was cut at a rate of 90 kg/hr on the average at the end of the screw press 3A and fed satisfactorily to the extruder 5A. The amount of the volatile matters remaining in the polymer was 0.1% by weight or less. The methyl para-toluate fed at an electron-donor to the polymerizer remained in a proportion of 2 ppm.

When a polymer slurry concentrated to about 50% by weight by only settlement utilizing gravity without using the screw press of this invention was evaporated and dried at ordinary pressure, the amount of methyl para-toluate remaining in the polymer obtained was 55 ppm. When the polymer slurry having a polymer concentration of 50% by weight was treated with the vented extruder 5A used in Example 2, the amount of the final volatile matters in the polymer obtained was 6 ppm.

From the above results, it can be seen that when the screw press of this invention is used, the amount of the high-boiling components remaining in the polymer can be reduced to about 1/3.

According to the process of this invention, the following effects can be obtained:

(1) The amount of the energy consumed to recover the polymer can be made very small.

(2) Even adhesive or tacky polymer can be highly concentrated.

(3) The removal of the high-boiling components contained in a very small amount is easy and a polymer having a high quality can be recovered.

**Claims**

1. A process for recovering a polymer from a slurry of the polymer, obtained by homopolymerizing an olefin or copolymerizing at least two olefins with or without a non-conjugated diene in a $C_{3-6}$ hydrocarbon solvent, which process comprises supplying the polymer slurry to a screw press having a filtration means, removing most of the hydrocarbon solvent from the slurry through the filtration means and concentrating and discharging the remaining wet polymer by screw action from the screw press.

2. A process according to Claim 1, wherein the olefin is ethylene, propylene, 1-butene, hexene or 4-methylpentene.

3. A process according to Claim 1 or Claim 2, wherein the non-conjugated diene is an alkenyl norbornene or cyclic diene.

4. A process according to any one of the preceding claims wherein the hydrocarbon solvent comprises propane, propylene, n-butane, isobutane, 1-butene, 2-butane, isobutylene, n-pentane, isopentane, cyclopentane, pentenes, n-hexane or cyclohexane.

5. A process according to any one of the preceding claims wherein the polymer slurry fed to the screw press has a polymer concentration of 5 to 50% by weight.

6. A process according to any one of the preceding claims wherein the filtration means is a slit screen or a wire mesh.

7. A process according to any one of the preceding claims wherein the temperature for concentrating the polymer slurry is not higher than the polymerization temperature.

8. A process according to any one of the preceding claims wherein the polymer slurry is recovered at -50°C to 60°C.

F I G. 1

# F I G. 2

# F I G. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | GB-A-2 156 363 (SHELL)<br>* page 1, line 128 - page 2, line 8; claim 1 *<br>– – – | 1 | C 08 F 6/24 |
| A | EP-A-0 141 622 (SUMITOMO CHEMICAL COMPANY LTD)<br>* claim 1 *<br>– – – – – | 1 | |

**TECHNICAL FIELDS SEARCHED (Int. Cl.5)**

C 08 F
B 29 B

The present search report has been drawn up for all claims

| Place of search | Date of completion of search | Examiner |
|---|---|---|
| The Hague | 17 May 91 | SERRAVALLE M. |

CATEGORY OF CITED DOCUMENTS
X : particularly relevant if taken alone
Y : particularly relevant if combined with another
    document of the same catagory
A : technological background
O : non-written disclosure
P : intermediate document
T : theory or principle underlying the invention

E : earlier patent document, but published on, or after
    the filing date
D : document cited in the application
L : document cited for other reasons

 

& : member of the same patent family, corresponding
    document